# EUROPÄISCHE PATENTANMELDUNG

(11) **EP 3 772 385 A1**
(43) Veröffentlichungstag der Anmeldung: **10.02.2021**
(21) Anmeldenummer: 19190717.9
(22) Anmeldetag: 08.08.2019
(51) Int. Cl.: B23B 47/00, B23B 47/22, B28D 7/02, B23Q 11/00, A47L 7/00

(54) **SYSTEM UND VERFAHREN ZUM HINEINTREIBEN EINER WERKZEUGMASCHINE IN EINE WAND ODER EINEN UNTERGRUND**

(71) Anmelder: Hilti Aktiengesellschaft, 9494 Schaan (LI)
(72) Erfinder: Balter, Marco, 6800 Feldkirch (AT); Rieger, Hans-Joerg, 6712 Thueringen (AT)
(74) Vertreter: Hilti Aktiengesellschaft Corporate Intellectual Property

(57) **Zusammenfassung**

Die vorliegende Erfindung betrifft ein System, das eine Werkzeugmaschine (1) und ein Sauggerät (2) umfasst. Mit dem System ist es möglich, ein Werkzeug (5) der Werkzeugmaschine in die Wand oder in den Untergrund (4) hineinzutreiben (Cut Assist-Funktion). Der Unterdruck (3) kann ferner dazu verwendet werden, die Werkzeugmaschine so an den Untergrund zu drücken, dass ein Benutzer nur einen geringen Kraftaufwand aufbringen muss, um die Werkzeugmaschine in einem idealen Arbeitspunkt zu halten.

## Beschreibung

Die vorliegende Erfindung betrifft ein System, das eine Werkzeugmaschine und ein Sauggerät umfasst. Mit dem System ist es möglich, ein Werkzeug der Werkzeugmaschine in die Wand oder in den Untergrund hineinzutreiben (Cut Assist-Funktion). Die Cut Assist-Funktion kann im Sinne der Erfindung auch als unterstütztes oder automatisches Bohren bezeichnet werden. Der Unterdruck kann ferner dazu verwendet werden, die Werkzeugmaschine so an den Untergrund zu drücken, dass ein Benutzer nur einen geringen Kraftaufwand aufbringen muss, um die Werkzeugmaschine in einer Arbeitsposition zu halten.

Darüber hinaus wird ein Verfahren und eine Verwendung eines von einem Sauggerät erzeugten Unterdrucks zum Hineintreiben einer Werkzeugmaschine oder eines Werkzeugs der Werkzeugmaschine in eine Wand oder in einen Untergrund offenbart.

Im Bereich der Werkzeugmaschinen, insbesondere bei Kernbohrgeräten, die beispielsweise mit diamantbesetzten Bohrkronen ausgestattet sein können, ist es bekannt, die Werkzeugmaschinen in Verbindung mit einer Auto-Vorschubvorrichtung (*auto feed*) zu betreiben. Solche Auto-Vorschubvorrichtungen sind vorzugsweise dazu eingerichtet, die Werkzugmaschine selbsttätig in das zu bearbeitende Material hineinzutreiben, ohne dass dafür - wie früher - handbetriebene Vorrichtungen, wie beispielsweise Drehräder, eingesetzt werden müssen. Insbesondere werden solche auto feed-Vorrichtungen in Verbindung mit einem Bohrständer eingesetzt, der die Werkzeugmaschine während ihres Betriebs in Position hält. Solche Bohrständer sind sowohl für vertikale Anwendungen bekannt, bei denen die Werkzeugmaschine in einen Untergrund in eine Arbeitsrichtung _{"}nach unten", hineinarbeitet, als auch für horizontale Anwendungen, bei denen eine Werkzeugmaschine auf eine zu bearbeitende Wand aufgesetzt wird, um beispielsweise ein Loch in der Wand zu bohren. Bei den Anwendungen ist es insbesondere bevorzugt, dass vor Betrieb der Werkzeugmaschine bzw. des Systems aus Werkzeugmaschine und Auto-Vorschubvorrichtung ein Bohrständer verwendet wird. Die Befestigung des Bohrständers an der Wand erfolgt beispielsweise unter Verwendung eines Unterdrucks bzw. eines Vakuums, mit dem entsprechende Komponenten des Bohrständers an der zu bearbeitenden Wand festgesaugt werden. Es kann im Sinne der Erfindung auch bevorzugt sein, Bohrständer mit Ankern zu montieren. Bekannte Bohrständer umfassen beispielsweise Führungsschienen, an denen die Auto-Vorschubvorrichtungen befestigt sein können und entlang derer die Auto-Vorschubvorrichtung die Werkzeugmaschine in die zu bearbeitende Wand hineintreiben kann.

Allerdings hat sich gezeigt, dass die Verwendung und Montage eines Bohrständers auf einer Baustelle umständlich und zeitintensiv sein kann. Eine Aufgabe, die der Erfindung zugrunde liegt, besteht demnach darin, eine Lösung dafür anzugeben, wie das Bohren mit einem Diamant-Bohrgerät einfacher gestaltet werden kann. Es wäre wünschenswert, wenn die vorgeschlagene Lösung sowohl für handgeführte Bohrgeräte, als auch für ständergeführte Bohrgeräte eingesetzt werden könnte.

Nachteilig an der Verwendung von auto feed-Vorrichtungen, die aus dem Stand der Technik bekannt sind, ist es, dass beim Bohren stets ein Bohrständer benötigt wird. Darüber hinaus stellt die auto feed-Vorrichtung ein zusätzliches Gerät dar, das das System, das zum Bohren verwendet wird, komplexer und damit fehleranfällig macht.

Es ist im Stand der Technik ferner bekannt, die Arbeit von Werkzeugmaschinen mit Sauggeräten zu unterstützen. Es können beispielsweise Nass- und/oder Trockensauger verwendet werden, um abgetragenes Material - sei es nun trocken (Staub) oder nass (Staub-Wasser-Gemisch) - abzusaugen und aus dem Bereich des Bohrlochs zu entfernen. Durch diese Entfernung werden insbesondere auch vorgeschriebene Arbeitsschutzmaßnahmen umgesetzt, mit denen beispielsweise erreicht werden soll, dass Staub nicht in die Atemwege der Arbeiter, die mit der Werkzeugmaschine arbeiten, gelangt. Darüber hinaus können Sauggeräte, wie Staubsauger, dazu verwendet werden, den Arbeitsplatz sauber halten. Dies kann beispielsweise bei Restaurationen sehr wichtig sein. Bekannt ist in diesem Zusammenhang insbesondere die Verwendung von Staubsaugvorrichtungen zur Staubkontrolle oder die Verwendung von sogenannten water management-Systemen (WMS) für Nassanwendungen. Ein Staub-Wasser-Gemisch kann insbesondere dann entstehen, wenn das Werkzeug der Werkzeugmaschine, beispielsweise die Bohrkrone eines (Diamant-)Bohrgeräts, bei Betrieb mit Wasser gekühlt wird. Das Kühlwasser vermischt sich dann mit dem bei der Bohrung abgetragenen Material, dem Bohrstaub, und bildet das Staub-Wasser-Gemisch. Bisher wird bei konventionellen Sauggeräten, die aus dem Stand der Technik bekannt sind, die Saugleistung bzw. der erzeugte Unterdruck lediglich zum Aufsaugen von Staub bzw. eines Staub-Wasser-Gemischs verwendet.

Die Aufgabe, die der vorliegenden Erfindung zugrunde liegt, besteht darin, die vorstehend beschriebenen Nachteile des Standes der Technik zu überwinden und ein System aus Werkzeugmaschine und Sauggerät bereitzustellen, um den Bohrvorgang für den Benutzer der Werkzeugmaschine zu erleichtern bzw. das Bohren zu unterstützen oder das automatische Bohren zu ermöglichen. Darüber hinaus wäre es wünschenswert, wenn mit der Erfindung eine alternative technische Lösung für die Bereitstellung einer Cut Assist-Funktion vorgeschlagen werden könnte, so dass zwar eine Vorschubkraft bereitgestellt wird, mit der die Werkzeugmaschine in die Wand oder in den Untergrund hineingetrieben wird, wobei diese Vorschubkraft ohne eine speziell dafür vorgesehene Auto-Vorschub-vorrichtung bereitgestellt werden soll.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System vorgesehen, das eine Werkzeugmaschine und ein Sauggerät umfasst. Das System ist dadurch gekennzeichnet, dass ein Werkzeug der Werkzeugmaschine in eine Wand oder in einen Untergrund hineintreibbar ist. Mit anderen Worten ist es im Sinne der Erfindung bevorzugt, dass ein Unterdruck, der von dem Sauggerät erzeugt wird, dazu verwendet werden kann, die Werkzeugmaschine in eine Wand oder in einen Untergrund hineinzutreiben. Dabei unterstützt der Unterdruck den Benutzer der Werkzeugmaschine vorteilhafterweise dabei, die Maschine in einer Arbeitsposition zu halten. Tests haben gezeigt, dass die Arbeit mit den üblicherweise sehr schweren Werkzeugmaschinen durch die unterdruck-basierte Unterstützung wesentlich erleichtert werden kann.

Bei der Werkzeugmaschine kann es sich vorzugsweise um ein Kernbohrgerät handeln, die beispielsweise dazu eingesetzt werden, große Löcher in einem Untergrund oder in einer Wand zu bohren, wobei durch die entstandenen Löcher später häufig Kabel und/oder Rohre geführt werden. Die Kernbohrgeräte können mit Bohrkronen ausgestattet sein, die einen Bohrkern erzeugen, der zumeist eine im Wesentlichen kreisförmige Grundfläche aufweist und der nach Beendigung der Bohrarbeiten aus dem Untergrund herausgebrochen wird. Häufig sind die Bohrkronen mit künstlichen Diamanten oder Diamantsplittern besetzt, um die Bohrleistung der Bohrkrone zu erhöhen.

Bei dem Sauggerät kann es sich beispielsweise um eine Staubsaugvorrichtung für Trocken- oder Nassbohranwendungen oder um ein *water management-*Systemen (WMS) für Nassanwendungen handeln. Sauggeräte im Sinne der Erfindung umfassen vorzugsweise eine Turbine, die von einem Motor angetrieben wird. Mit Hilfe der Turbine kann ein Unterdruck im Innern des Sauggeräts erzeugt werden, wobei dieser Unterdruck vorzugsweise dazu verwendet werden kann, Staub oder ein Staub-Wasser-Gemisch, das bei Betrieb der Werkzeugmaschine entsteht, aufzusaugen. Vorzugsweise sind das Sauggerät und die Werkzeugmaschine mit einem Saugschlauch miteinander verbunden. Durch diesen Saugschlauch kann der aufgesaugte Staub oder das aufgesaugte Wasser-Staub-Gemisch aus dem Arbeitsbereich der Werkzeugmaschine in das Sauggerät transportiert werden. Der Unterdruck, der von dem Sauggerät erzeugt wird, kann im Sinne der Erfindung bevorzugt auch als "Vakuum" bezeichnet werden. Der Unterdruck wird vorzugsweise mit dem Saugschlauch von dem Sauggerät in den Arbeitsbereich der Werkzeugmaschine übertragen. Beispielsweise kann in einer Bohrkrone eines Kernbohrgeräts ein Unterdruck vorliegen, mit dem der Staub oder der Abraum aus dem Bohrloch herausgesogen werden kann.

Es ist im Sinne der Erfindung bevorzugt, dass beispielsweise beim handgeführten Bohren Anpresskräfte in einer Größenordnung von 150 bis 200 N verwendet werden. Diese Anpresskräfte werden im Kontext der vorliegenden Erfindung vorteilhafterweise durch einen Unterdruck erzeugt, der vorzugsweise auf dem Bohrkronendurchmesser angepasst werden kann. Insbesondere ist es bevorzugt, dass der Unterdruck so groß ist, dass das Bohrsystem durch den Unterdruck an die Wand gepresst bzw. an den Untergrund herangezogen werden kann.

Es ist im Sinne der Erfindung bevorzugt, dass das vorgeschlagene System aus Werkzeugmaschine und Sauggerät ohne eine Auto-Vorschubeinrichtung auskommt, wobei eine Auto-Vorschubeinrichtung üblicherweise dazu eingerichtet ist, eine Werkzeugmaschine oder ein Werkzeug der Werkzeugmaschine in eine Wand oder einen Untergrund hineinzutreiben. Die Aufgabe der üblicherweise vorhandenen automatischen Vorschubvorrichtung wird im Falle der vorliegenden Erfindung vorteilhafterweise von dem Sauggerät bzw. dem von dem Sauggerät erzeugten Unterdruck übernommen. Es ist im Sinne der Erfindung insbesondere bevorzugt, dass das System ohne eine Auto-Vorschubeinrichtung auskommt, mit der die Werkzeugmaschine in die Wand oder den Untergrund hineintreibbar ist.

Tests haben gezeigt, dass gerade bei handgeführten Anwendungen häufig zu wenig Druck durch die Benutzer aufgebracht werden kann, um die Werkzeugmaschinen im optimalen Performancebereich zu betreiben. Vorteilhafterweise kann mit dem vorgeschlagenen System eine optimale Bohrperformance bei minimaler Bohrzeit erreicht werden, dies insbesondere unabhängig von der individuellen Leistungsfähigkeit des Arbeiters in Bezug auf Körperstärke und Ausdauer. Ein weiterer wesentlicher Vorteil der Erfindung besteht darin, dass das vorgeschlagene System sowohl bei handgeführten Anwendungen, als auch bei ständergeführten Anwendungen eingesetzt werden kann.

Es ist gemäß einer Ausführungsform der Erfindung bevorzugt, dass der Unterdruck des Sauggeräts dazu eingerichtet ist, das Werkzeug oder die Werkzeugmaschine in die Wand bzw. in den Untergrund hineinzutreiben. Diese Funktion des Unterdrucks wird im Sinne der Erfindung vorzugsweise als "Cut Assist" bezeichnet. Vorzugsweise betrifft die Erfindung somit ein von Hand gehaltenes Bohrgerät mit einer Cut Assist-Funktion, wobei die Cut Assist-Funktion Unterdruckbasiert arbeitet. Die Kraft, mit der die Werkzeugmaschine oder das Werkzeug in die Wand oder den Untergrund hineingetrieben werden kann, wird im Sinne der Erfindung vorzugsweise als "Vorschubkraft" bezeichnet. Es ist im Sinne der Erfindung insbesondere bevorzugt, dass das Sauggerät die Vorschubkraft durch die Leistung des Sauggeräts steuern kann. Diese Steuerungsmöglichkeit beruht insbesondere darauf, dass die Saugleistung des Sauggeräts und der von dem Sauggerät erzeugte Unterdruck zusammenhängen. Es ist im Sinne der Erfindung bevorzugt, dass die Saugleistung des Sauggeräts im Vergleich zu konventionellen Sauggeräten, die mit Werkzeugmaschinen zusammenarbeiten, erheblich erhöht werden kann. Mit anderen Worten wird im Kontext der vorliegenden Erfindung vorzugsweise ein Sauggerät mit großer Saugleistung bzw. Saugstärke eingesetzt. Dadurch wird beispielsweise erreicht, dass die Saugleistung des Sauggeräts bzw. die Vorschubkraft, mit der die Werkzeugmaschine in eine Wand oder in einen Untergrund getrieben wird, in Abhängigkeit von der Bohrleistung der Werkzeugmaschine kontrolliert bzw. geregelt werden kann. Wenn beispielsweise die Werkzeugmaschine mit einer hohen Leistung betrieben wird und eine große Menge Abraum zu erwarten ist, kann die Saugleistung des Sauggeräts an diese größere Abraummenge angepasst werden, wobei diese Anpassung vorzugsweise automatisch innerhalb des Systems abläuft. Analog kann eine Saugleistung bzw. ein erzeugter Unterdruck reduziert werden, wenn die Werkzeugmaschine mit einer geringen Arbeitsleistung betrieben wird und nur geringe Abraummengen pro Zeiteinheit zu erwarten sind. Die Anpassbarkeit der Saugleistung des Sauggeräts an die Betriebsleistung der Werkzeugmaschine stellt ein wesentliches Verdienst der vorliegenden Erfindung dar. Es ist im Sinne der Erfindung ganz besonders bevorzugt, dass das vorgeschlagene System aus Werkzeugmaschine und Sauggerät dazu eingerichtet ist, die Werkzeugmaschine in einem idealen Arbeitspunkt zu halten. Dadurch wird es durch die Erfindung vorteilhafterweise ermöglicht, eine im Vergleich zu konventionellen System erheblich gesteigerte Performance zu bereitzustellen. Es war vollkommen überraschend, dass eine Werkzeugmaschine bzw. ein Werkzeug einer Werkzeugmaschine unter Verwendung des Unterdrucks eines Sauggeräts in eine Wand oder in einen Untergrund hineingetrieben werden kann, wodurch mit dem vorgeschlagenen System überraschenderweise eine vakuumbasierte Cut Assist-Funktion bereitgestellt werden kann.

Gemäß einer weiteren Ausführungsform der Erfindung ist es bevorzugt, dass die Werkzeugmaschine dazu eingerichtet ist, mit einem Unterdruck, der von dem Sauggerät erzeugbar ist, in einer Arbeitsposition an der Wand oder an dem Untergrund gehalten zu werden. Diese Unterstützung des Arbeiters wird vorteilhafterweise dadurch erreicht, dass der Unterdruck eine Haltekraft zwischen Wand bzw. Untergrund auf der einen Seite bzw. der Werkzeugmaschine bzw. dem Werkzeug auf der anderen Seite bewirkt. Es ist im Sinne der Erfindung bevorzugt, dass die Haltekraft in Abhängigkeit von der Betriebs- oder Bohrleistung der Werkzeugmaschine einstellbar ist.

Es ist im Sinne der Erfindung bevorzugt, dass der Unterdruck in Abhängigkeit von einer Saugleistung des Sauggeräts des Systems einstellbar ist. Vorzugsweise kann die Saugleistung des Sauggeräts unter Verwendung einer Kommunikationsverbindung zwischen der Werkzeugmaschine und dem Sauggerät eingestellt werden. Die Kommunikationsverbindung kann vorzugsweise *bluetooth*-basiert ausgebildet sein. Insbesondere kann die Kommunikation kabelgebunden und/oder drahtlos erfolgen. Es sind aber auch alle weiteren gängigen Kommunikationstechnologien im Kontext der vorliegenden Erfindung einsetzbar.

Es ist im Sinne der Erfindung bevorzugt, dass eine Saugleistung des Sauggeräts einstellbar ist. Mit anderen Worten weist das Sauggerät eine einstellbare Saugleistung auf. Es ist ganz besonders bevorzugt, dass eine optimale Saugleistung in der Werkzeugmaschine durch ein geeignetes Bestimmungsverfahren ermittelt werden kann. Das Ergebnis dieses Bestimmungsverfahrens, d.h. die für einen Zeitpunkt t ermittelte optimale Saugleistung, wird dann vorzugsweise an das Sauggerät übertragen und als Steuersignal verwendet.

Es ist im Sinne der Erfindung bevorzugt, dass eine Vorschubkraft, mit der die Werkzeugmaschine in die Wand oder den Untergrund hineintreibbar ist, unter Verwendung der Kommunikationsverbindung zwischen der Werkzeugmaschine und dem Sauggerät eingestellt werden kann. Ferner kann auch eine Haltekraft, mit der die Werkzeugmaschine an einer Wand oder an einem Untergrund gehalten werden kann, unter Verwendung der Kommunikationsverbindung zwischen der Werkzeugmaschine und dem Sauggerät eingestellt bzw. geregelt oder gesteuert werden. Dazu umfasst das vorgeschlagene System, insbesondere die Kommunikationsverbindung des Systems, eine Kommunikationsschnittstelle, die zur Kommunikation mit der Werkzeugmaschine und/oder dem Sauggerät eingerichtet ist. Insbesondere ist die Kommunikationsschnittstelle dazu eingerichtet, die Saugleistung des Sauggeräts, die Vorschubkraft und/oder eine Befestigungskraft in Abhängigkeit von einer Betriebsleistung der Werkzeugmaschine zu regeln bzw. einzustellen. Die Betriebsleistung der Werkzeugmaschine kann, wenn die Werkzeugmaschine beispielsweise von einem Kernbohrgerät gebildet wird, vorzugsweise auch als Bohrleistung des Kernbohrgeräts bezeichnet werden.

Es ist im Sinne der Erfindung bevorzugt, dass das System einen Faltenbalg zur Vergrößerung einer Fläche, auf die der Unterdruck wirkt, umfasst. Diese Ausgestaltung der Erfindung kann insbesondere dann von Vorteil sein, wenn der Unterdruck des Sauggeräts dazu verwendet wird, um die Werkzeugmaschine bzw. das Werkzeug an einer Wand oder ein einem Untergrund in einer Arbeitsposition zu halten. Insbesondere kann mit dem Faltenbalg die Fläche, auf die der Untergrund wirkt, vergrößert werden, was vor allem dann vorteilhaft ist, wenn beispielsweise Bohrkronen mit kleinen Durchmessern verwendet werden. Diese kleinen Bohrkronen berühren die Wand oder den Untergrund auf einer vergleichsweise geringen Fläche, so dass der Unterdruck des Sauggeräts, der mit einem Saugschlauch in das Innere der Bohrkrone übertragen wird, nur an dieser kleinen Fläche angreifen kann. Dadurch muss unter Umständen mit sehr großen Unterdrücken bzw. hohen Saugleistungen des Sauggeräts gearbeitet werden. Vorteilhafterweise kann die Angriffs- oder Berührfläche durch die Verwendung bzw. die Vorsehung des Faltenbalgs erheblich vergrößert werden, so dass mit geringeren Unterdrücken gearbeitet werden kann. Tests haben gezeigt, dass die Angriffsfläche an der Wand oder an dem Untergrund durch die Verwendung eines Faltenbalgs konstant groß gehalten werden kann, so dass im Kontext der vorliegenden Erfindung Kernbohrgeräte mit Bohrkronen mit verschieden großen Durchmessern verwendet werden können. Alternativ zu dem Faltenbalg kann jedes andere Flächenvergrößerungsmittel verwendet werden, das dazu eingerichtet ist, die Fläche, auf die der vom Sauggerät erzeugte Unterdruck wirkt, zu vergrößern.

In einer weiteren bevorzugten Ausgestaltung der Erfindung umfasst das System einen Wasserauffangring, der mit einem Unterdruck an der Wand oder dem Untergrund befestigbar ist. Vorzugsweise ist der Wasserauffangring dazu eingerichtet, unter Verwendung des Unterdrucks an der Wand oder an dem Unterdruck zu halten und Wasser bzw. das Wasser-Staub-Gemisch aufzufangen. Es ist im Sinne der Erfindung bevorzugt, dass der Wasserauffangring zusätzliche Treibmittel umfasst, mit denen die Werkzeugmaschine oder das Werkzeug der Werkzeugmaschine in die Wand oder in den Untergrund hineintreibbar sind. Die zusätzlichen Treibmittel können vorzugsweise als Rollen ausgebildet sein. Es sind jedoch auch andere Mechanismen als Treibmittel denkbar. Es ist im Sinne der Erfindung insbesondere bevorzugt, dass die zusätzlichen Rollen, die beispielsweise als Treibmittel verwendet werden können, durch einen Luftstrom angetrieben werden, wodurch vorteilhafterweise die Bohrkrone in die Wand oder in den Untergrund gedrückt werden kann. Beispielsweise können die Rollen Lüfterräder und/oder Turbinen aufweisen oder in dieser Weise ausgestaltet sein. In diesem Fall können die Treibmittel in dem Gemisch aus Wasser, Staub und/oder Luft vom Bohrloch zum Sauggerät angetrieben werden.

Es ist im Sinne der Erfindung bevorzugt, dass das System einen Bohrständer umfasst, mit dem die Werkzeugmaschine in einer Arbeitsposition haltbar ist. Insbesondere kann die Werkzeugmaschine des Systems mit dem Bohrständer in einer Arbeitsposition gehalten werden. Bei der Werkzeugmaschine handelt es sich vorzugsweise um eine handgehaltene Werkzeugmaschine, die im Sinne der Erfindung auch als *handheld* Werkzeugmaschine bezeichnet wird. Es ist ganz besonders bevorzugt, dass die Werkzeugmaschine von einem Kernbohrgerät und das Werkzeug der Werkzeugmaschine von einer Bohrkrone gebildet wird.

Es ist im Sinne der Erfindung insbesondere bevorzugt, dass die Werkzeugmaschine im Kontext der Erfindung in die Wand oder in den Untergrund hineingetrieben werden kann. Für dieses Hineintreiben der Werkzeugmaschine bzw. des Werkzeugs der Werkzeugmaschine wird vorzugsweise der von dem Sauggerät erzeugte Unterdruck verwendet. Die Kraft, mit der das Hineintreiben erfolgt, wird im Sinne der Erfindung bevorzugt als Vorschubkraft bezeichnet. Die entsprechende Funktion, die mit dem vorgeschlagenen System bereitgestellt werden kann, wird vorzugsweise als Cut Assist-Funktion bezeichnet. Insofern betrifft die Erfindung vorzugsweise auch ein Verfahren zum Hineintreiben einer Werkzeugmaschine in eine Wand oder in einen Untergrund umfassend die folgenden Schritte:
a) Bereitstellung einer Werkzeugmaschine, die mit einem Sauggerät verbunden vorliegt,
b) Erzeugung eines Unterdrucks mit dem Sauggeräts,
c) Verwendung des Unterdrucks zum Hineintreiben der Werkzeugmaschine in die Wand oder in den Untergrund.

Es ist im Sinne der Erfindung bevorzugt, dass das Verfahren den zusätzlichen Schritt umfasst, dass eine Saugleistung des Sauggeräts, eine Vorschubkraft, mit der die Werkzeugmaschine in die Wand oder den Untergrund hineintreibbar ist, und/oder eine Befestigungskraft unter Verwendung einer Kommunikationsverbindung zwischen der Werkzeugmaschine und dem Sauggerät eingestellt werden kann. Darüber hinaus ist es bevorzugt, dass die Werkzeugmaschine und das Sauggerät über eine Kommunikationsschnittstelle miteinander kommunizieren, so dass die Saugleistung des Sauggeräts, die Vorschubkraft und/oder die Befestigungskraft unter Verwendung der Kommunikationsschnittstelle geregelt werden können.

Die Erfindung betrifft in einem weiteren Aspekt insbesondere die Verwendung der Saugleistung des Sauggeräts, um das Werkzeug der Werkzeugmaschine an der zu bearbeitenden Wand festzusaugen. Zusätzlich kann der vom Sauggerät erzeugte Unterdruck verwendet werden, um die Werkzeugmaschine oder das Werkzeug der Werkzeugmaschine im Sinne einer Cut Assist-Funktion in die Wand oder in den Untergrund hineinzutreiben. Die für das System eingeführten Begriffe, Definitionen und technischen Vorteile gelten vorzugsweise für die vorgeschlagenen Verfahren und Verwendungen des Unterdrucks analog.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausgestaltung des vorgeschlagenen Systems
- Fig. 2: Ansicht einer bevorzugten Ausgestaltung des vorgeschlagenen Systems mit einem Faltenbalg
- Fig. 3: Ansicht einer bevorzugten Ausgestaltung des vorgeschlagenen Systems mit einem Wasserauffangring

### Ausführungsbeispiele:

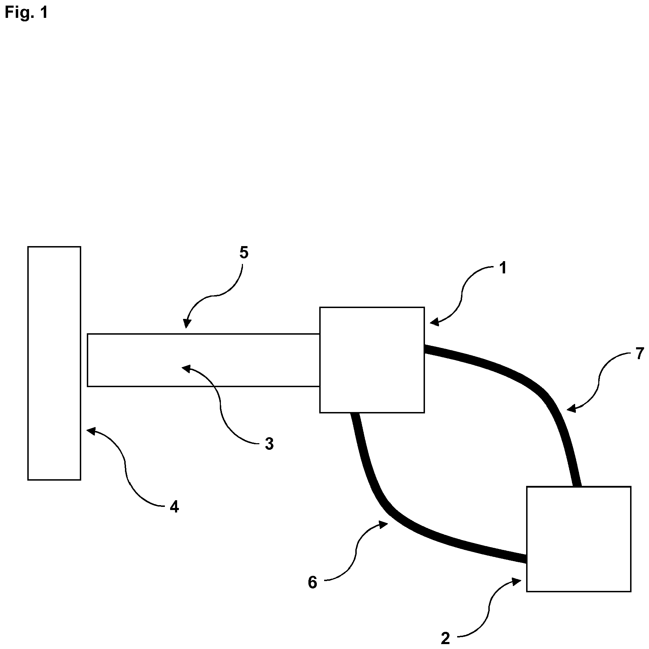

Figur 1 zeigt eine bevorzugte Ausgestaltung der Erfindung. Insbesondere zeigt Figur 1 eine bevorzugte Ausführungsform des vorgeschlagenen Systems, das eine Werkzeugmaschine (1) und ein Sauggerät (2) umfasst. Bei der Werkzeugmaschine (1) kann es sich vorzugsweise um ein Kernbohrgerät handeln, bei dem Sauggerät (2) um eine Staubsaugvorrichtung oder ein *water management* System (WMS), das insbesondere für Nassanwendungen verwendet werden kann. Die Werkzeugmaschine (1) umfasst ein Werkzeug (5), bei dem es sich beispielsweise um eine Bohrkrone eines Kernbohrgeräts handeln kann. Die Bohrkrone kann zum Beispiel mit Diamanten oder Diamantsplittern besetzt sein, wenn es sich bei der Werkzeugmaschine (1) um eine Diamant-Kernbohrgerät handelt.

Die Werkzeugmaschine (1) kann über einen Saugschlauch (6) mit dem Sauggerät (2) verbunden sein. Mit dem Saugschlauch (6) kann ein Unterdruck (3), der in dem Sauggerät (2) erzeugt wird, in einen Arbeitsbereich der Werkzeugmaschine (1) übertragen werden. Es ist im Sinne der Erfindung bevorzugt, dass der Saugschlauch (6) dazu eingerichtet ist, eine strömungsleitende Verbindung zwischen dem Bereich des Sauggeräts (2), in dem der Unterdruck (3) erzeugt wird, und dem Arbeitsbereich der Werkzeugmaschine (1) herzustellen. Insbesondere kann mit dem Saugschlauch (6) ein Unterdruck (3) in dem Werkzeug (5) der Werkzeugmaschine (1) erzeugt bzw. darin bereitgestellt werden. Mit diesem Unterdruck (3) kann das Bohrmehl oder eine Staub-Wasser-Gemisch aus dem Arbeitsbereich der Werkzeugmaschine (1) entfernt werden. Im Kontext der vorliegenden Erfindung wird vorzuschlagen, den bereits vorhandenen Unterdruck (3) bzw. die Saugleistung des Sauggeräts (2) für zusätzliche Funktionen zu verwenden. Diese Funktionen können beispielsweise darin bestehen, dass die Werkzeugmaschine (1) unter Verwendung des Unterdrucks (3) an einer Wand (4) oder an einem Untergrund (4) in einer für den Benutzer günstigen Arbeitsposition gehalten wird. Der Unterdruck (3) kann darüber hinaus auch dafür verwendet werden, die Werkzeugmaschine (1) oder das Werkzeug (5) der Werkzeugmaschine (1) in die Wand (4) oder in den Untergrund (4) hineinzutreiben (Cut Assist-Funktion). Dazu kann die Saugleistung, die mit dem Sauggerät (2) des vorgeschlagenen Systems bereitgestellt werden kann, gegenüber herkömmlichen Sauggeräten (2) erheblich erhöht sein.

Es ist im Sinne der Erfindung besonders bevorzugt, dass die Haltekraft und/oder die Vorschubkraft, die mit dem Sauggerät (2) des Systems erzeugt werden können, in Abhängigkeit von der Betriebsleistung der Werkzeugmaschine (1) eingestellt bzw. ausgewählt werden können. Die Betriebsleistung der Werkzeugmaschine (1) kann beispielsweise eine Bohrleistung sein, wenn die Werkzeugmaschine (1) ein Kernbohrgerät ist. Wenn beispielsweise die Werkzeugmaschine (1) mit einer hohen Leistung betrieben wird und zu erwarten ist, dass größere Mengen Staub bzw. des Staub-Wasser-Gemischs erzeugt werden bzw. anfallen, kann die Vorschubkraft bzw. die Befestigungskraft, die vom Sauggerät (2) des Systems erzeugt werden, ebenfalls erhöht werden, um eine sichere Befestigung der Werkzeugmaschine (1) an der Wand (4) oder ein wirksames Hineintreiben der Werkzeugmaschine (1) zu ermöglichen. Es ist mit anderen Worten bevorzugt, dass die Haltekraft und/oder die Vorschubkraft, die mit dem Sauggerät (2) erzeugt wird, an die Betriebs- oder Bohrleistung der Werkzeugmaschine (1) angepasst werden kann. Eine solche Anpassung der Haltekraft und/oder der Vorschubkraft an die Betriebs- oder Bohrleistung der Werkzeugmaschine (1) kann insbesondere durch eine Anpassung des mit dem Sauggerät (2) erzeugten Unterdrucks (3) erreicht werden. Es ist im Sinne der Erfindung insbesondere bevorzugt, dass die Befestigungskraft und/oder die Vorschubkraft über eine Regulierung des Unterdrucks (3), der vom Sauggerät (2) des Systems erzeugt wird, eingestellt werden können. Vorzugsweise korreliert der vom Sauggerät (2) erzeugte Unterdruck (3) bzw. seine Größe mit einer Saugleistung, die vorzugsweise am Sauggerät (2) eingestellt werden kann. Mit anderen Worten kann der Unterdruck (3), der mit dem Sauggerät (2) erzeugt wird, in Abhängigkeit von der Saugleistung des Sauggeräts (2) eingestellt werden. Es stellt einen wesentlichen Verdienst der vorliegenden Erfindung dar, dass der grundsätzlich vorhandene Unterdruck (3), der von dem Sauggerät (2) des Systems erzeugt wird, für eine Reihe weiterer Funktionen verwendet bzw. ausgenutzt wird.

Es ist im Sinne der Erfindung insbesondere bevorzugt, dass die Saugleistung des Sauggeräts (2) unter Verwendung einer Kommunikationsverbindung (7) einstellbar ist. Die Kommunikationsverbindung (7) ist insbesondere zwischen der Werkzeugmaschine (1) und dem Sauggerät (2) ausgebildet. Beispielsweise kann die Kommunikationsverbindung (7) als *bluetooth*-Kommunikationsverbindung ausgebildet sein. Es ist in diesem Zusammenhang bevorzugt, dass sowohl die Werkzeugmaschine (1), als auch das Sauggerät (2) bluetooth-fähig sind. Es sind im Kontext der vorliegenden Erfindung jedoch auch andere Arten von Kommunikationsverbindungen denkbar. Die Kommunikationsverbindung (7) erlaubt es vorteilhafterweise, dass die Befestigungskraft und/oder die Vorschubkraft, sowie der Unterdruck (3), der von dem Sauggerät (2) erzeugt wird, in Abhängigkeit von der Betriebsleistung der Werkzeugmaschine (1) eingestellt bzw. angepasst werden kann. Insbesondere ermöglicht die Kommunikationsverbindung (7) eine Kommunikation zwischen der Werkzeugmaschine (1) und dem Sauggerät (2). Es ist im Sinne der Erfindung bevorzugt, dass die Kommunikationsverbindung (7) ferner zum Austausch weiterer Daten, Befehle und/oder Informationen zwischen der Werkzeugmaschine (1) und dem Sauggerät (2) verwendet wird.

Vorzugsweise umfasst das System eine Kommunikationsschnittstelle, die vorzugsweise die Kommunikation zwischen Werkzeugmaschine (1) und Sauggerät (2) ermöglicht. Es ist im Sinne der Erfindung insbesondere bevorzugt, dass die Kommunikationsschnittstelle dazu eingerichtet ist, die Kommunikationsverbindung (7) zwischen Werkzeugmaschine (1) und Sauggerät (2) herzustellen. Mit anderen Worten ist es im Sinne der Erfindung bevorzugt, dass die Kommunikationsverbindung (7) eine Kommunikationsschnittstelle umfasst, die zur Kommunikation mit der Werkzeugmaschine (1) und/oder dem Sauggerät (2) eingerichtet ist. Dadurch kann vorteilhafterweise die Vorschubkraft, mit der die Werkzeugmaschine (1) in die Wand (4) oder den Untergrund (4) hineingetrieben werden kann, unter Verwendung der Kommunikationsverbindung (7) eingestellt werden. Mithin ist die Kommunikationsschnittstelle dazu eingerichtet, die Saugleistung des Sauggeräts (2) und/oder die Vorschubkraft zu regeln.

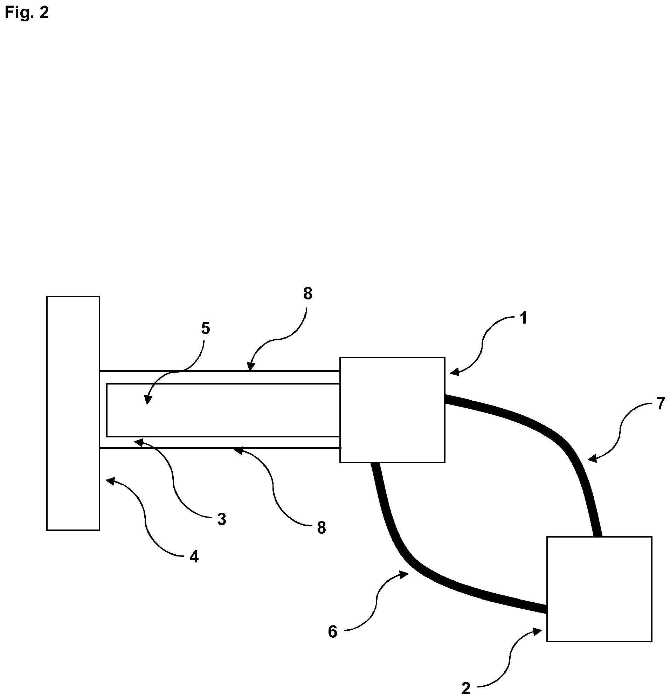

Figur 2 zeigt eine Ansicht einer bevorzugten Ausgestaltung des vorgeschlagenen Systems mit einem Faltenbalg (8). Es ist im Sinne der Erfindung bevorzugt, dass der Faltenbalg (8) insbesondere zur Vergrößerung der Fläche dient, auf die der Unterdruck (3) wirkt. Komponenten des Faltenbalgs (8) verlaufen vorzugsweise im Wesentlichen parallel zu dem Werkzeug (5) der Werkzeugmaschine (1) und berühren die Wand (4) oder den Untergrund (4), der mit der Werkzeugmaschine (1) bearbeitet werden soll. Insbesondere umschließt der Faltenbalg (8) das Werkzeug (5) der Werkzeugmaschine (1). An den Berührstellen zwischen Faltenbalg (8) und Wand (4) oder Untergrund (4) wird vorzugsweise ein Formschluss gebildet, so dass ein abgeschlossener Raum zwischen Faltenbalg (8), Wand (4) bzw. Untergrund (4) und Werkzeug (5) bzw. Werkzeugmaschine (1) gebildet wird. Vorzugsweise liegt auch in diesem, unter anderem vom Faltenbalg (8) gebildeten abgeschlossenen Raum der Unterdruck (3) vor, der von dem Sauggerät (2) erzeugt wird und der mit dem Saugschlauch (6) von dem Sauggerät (2) an die Werkzeugmaschine (1) übertragen werden kann. Durch den Unterdruck (3) kann vorteilhafterweise die Werkzeugmaschine (1) bzw. das Werkzeug (5) in den Untergrund (4) oder in die Wand (4) hineingetrieben werden. Der Unterdruck (3) kann vorteilhafterweise aber auch dazu verwendet werden, die Werkzeugmaschine (1) an der Wand (4) oder an dem Untergrund (4) zu befestigen. Insbesondere wird durch den Faltenbalg (8) die Angriffsfläche des Unterdrucks (3) auf die Wand (4) vergrößert. Dadurch kann beispielsweise mit einer geringeren Saugleistung des Sauggeräts (2) bzw. einem geringeren zu erzeugenden Unterdruck (3) gearbeitet werden, was Energie und Kosten einspart.

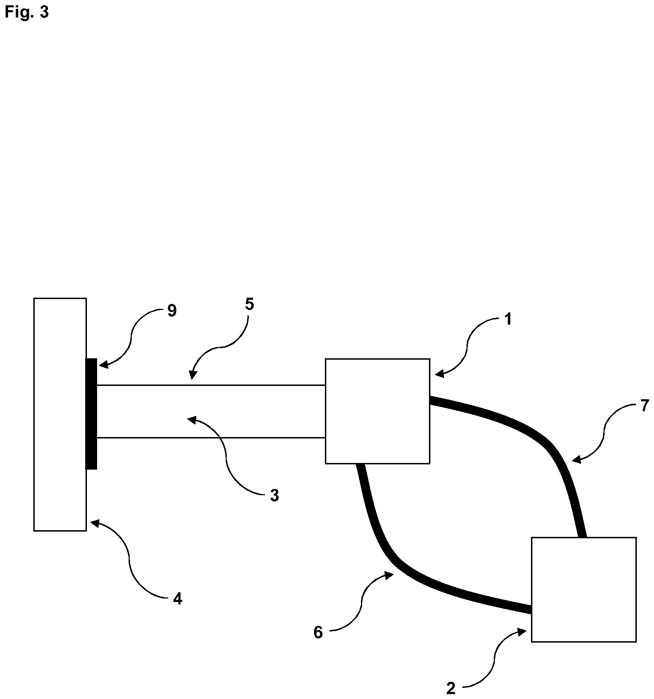

Figur 3 zeigt eine Ansicht einer bevorzugten Ausgestaltung des vorgeschlagenen Systems mit einem Wasserauffangring (9). Es ist im Sinne der Erfindung bevorzugt, dass der Wasserauffangring (9) mit einem Unterdruck (3) an der Wand (4) oder dem Untergrund (4) befestigt werden kann. Vorzugsweise weist der Wasserauffangring (9) Treibmittel auf, mit denen die Werkzeugmaschine (1) oder das Werkzeug (5) der Werkzeugmaschine (1) in die Wand (4) oder in den Untergrund (4) hineingetrieben werden können. Vorzugsweise kann der Wasserauffangring (9) die Cut Assist-Funktion des vorgeschlagenen Systems unterstützen. Die Treibmittel können beispielsweise als Rollen ausgebildet sein. Es ist im Sinne der Erfindung bevorzugt, dass der Wasserauffangring (9) zwischen der Wand (4) bzw. dem Untergrund (4) auf der einen Seite und dem Werkzeug (5) der Werkzeugmaschine (1) auf der anderen Seite angeordnet vorliegt. Vorzugsweise ist der Wasserauffangring (9) dazu eingerichtet, bei Nassanwendungen das aus Kühlwasser und Bohrmehl gebildete Staub-Wasser-Gemisch aufzufangen, wobei das aufgefangene Staub-Wasser-Gemisch vorzugsweise mit dem Sauggerät (2) abgesaugt werden kann.

### Bezugszeichenliste

- 1: Werkzeugmaschine
- 2: Sauggerät
- 3: Unterdruck
- 4: Wand oder Untergrund
- 5: Werkzeug der Werkzeugmaschine
- 6: Saugschlauch
- 7: Kommunikationsverbindung
- 8: Faltenbalg
- 9: Wasserauffangring

## Patentansprüche

1. System, das eine Werkzeugmaschine (1) und ein Sauggerät (2) umfasst,
**dadurch gekennzeichnet, dass**
ein Werkzeug (5) der Werkzeugmaschine (1) in eine Wand (4) oder in einen Untergrund (4) hineintreibbar ist.

2. System nach Anspruch 1
**dadurch gekennzeichnet, dass**
der Unterdruck (3) in Abhängigkeit von einer Betriebsleistung der Werkzeugmaschine (1) einstellbar ist.

3. System nach Anspruch 1 oder 2
**dadurch gekennzeichnet, dass**
der Unterdruck (3) unter Verwendung einer Kommunikationsverbindung (7) zwischen der Werkzeugmaschine (1) und dem Sauggerät (2) einstellbar ist.

4. System nach einem der vorhergehenden Ansprüche
**dadurch gekennzeichnet, dass**
eine Vorschubkraft, mit der die Werkzeugmaschine (1) in die Wand (4) oder den Untergrund (4) hineintreibbar ist, unter Verwendung einer Kommunikationsverbindung (7) zwischen der Werkzeugmaschine (1) und dem Sauggerät (2) einstellbar ist.

5. System nach Anspruch 3 oder 4
**dadurch gekennzeichnet, dass**
die Kommunikationsverbindung (7) eine Kommunikationsschnittstelle umfasst, die zur Kommunikation mit der Werkzeugmaschine (1) und/oder dem Sauggerät (2) eingerichtet ist.

6. System nach Anspruch 5
**dadurch gekennzeichnet, dass**
die Kommunikationsschnittstelle dazu eingerichtet ist, eine Saugleistung des Sauggeräts (2) und/oder den Unterdruck (3) zu regeln.

7. System nach einem der vorhergehenden Ansprüche
**dadurch gekennzeichnet, dass**
die Kommunikationsverbindung (7) drahtlos und/oder bluetooth-basiert erfolgt.

8. System nach einem der vorhergehenden Ansprüche
**dadurch gekennzeichnet, dass**
das System einen Faltenbalg (8) zur Vergrößerung einer Fläche, auf die der Unterdruck (3) wirkt, umfasst.

9. System nach einem der vorhergehenden Ansprüche
**dadurch gekennzeichnet, dass**
das System einen Wasserauffangring (9) umfasst, der mit einem Unterdruck (3) an der Wand (4) oder dem Untergrund (4) befestigbar ist, wobei der Wasserauffangring (9) zusätzliche Treibmittel umfasst, mit denen die Werkzeugmaschine (1) oder das Werkzeug (5) der Werkzeugmaschine (1) in die Wand (4) oder in den Untergrund (4) hineintreibbar sind.

10. System nach Anspruch 9
**dadurch gekennzeichnet, dass**
die Treibmittel als Rollen ausgebildet sind.

11. System nach einem der vorhergehenden Ansprüche
**dadurch gekennzeichnet, dass**
das System ohne eine Auto-Vorschubeinrichtung auskommt, mit der die Werkzeugmaschine (1) in die Wand (4) oder den Untergrund (4) hineintreibbar ist.

12. Verwendung eines von einem Sauggerät (2) erzeugten Unterdrucks (3) zum Hineintreiben einer Werkzeugmaschine (1) in eine Wand (4) oder in einen Untergrund (4).
